# EUROPÄISCHE PATENTANMELDUNG

(11) **EP 0 680 985 A1**
(43) Veröffentlichungstag der Anmeldung: **08.11.1995**
(21) Anmeldenummer: 95106155.5
(22) Anmeldetag: 25.04.1995
(51) Int. Cl.: C08G 63/58, C08G 63/91

(54) **Verfahren zur Herstellung von strahlungshärtbaren Acrylaten**

(30) Priorität: 04.05.1994 DE 4415624
(71) Anmelder: BASF AKTIENGESELLSCHAFT, D-67056 Ludwigshafen (DE)
(72) Erfinder: Reich, Wolfgang, Dr., D-67133 Maxdorf (DE); Jäger, Ulrich, Dr., D-67376 Harthausen (DE); Beck, Erich, Dr., D-69198 Schriesheim (DE); Keil, Edmund, D-67259 Heuchelheim (DE); Erhardt, Ulrich, Dr., D-68526 Ladenburg (DE); Nuber, Adolf, Dr., D-67459 Böhl-Iggelheim (DE)

(57) **Zusammenfassung**

Verfahren zur Herstellung von strahlungshärtbaren Acrylaten, dadurch gekennzeichnet, daß in einer 1. Stufe Hydroxyverbindungen mit Acrylsäure oder Methacrylsäure umgesetzt werden und das Reaktionsprodukt der 1. Stufe anschließend in oder vor einer 2. Stufe mit Epoxidverbindungen zur Reaktion gebracht wird und in der 2. Stufe Verbindungen mit einer oder mehreren primären oder sekundären Aminogruppen zugesetzt werden und die Reaktion in der 2. Stufe nach Zugabe dieser Verbindungen noch solange geführt wird, bis die Reaktionsmischung um mindestens einen Betrag von 3 mg KOH/g Reaktionsmischung ab dem Zeitpunkt der Zugabe dieser Verbindungen abgenommen hat.

## Beschreibung

Die Erfindung betrifft ein Verfahren zur Herstellung von strahlungshärtbaren Acrylaten. Aus der EP-A-54 105, DE-A 33 16 593 und EP-A-27 93 303 sind Verfahren bekannt, bei denen in einer 1. Stufe ein (Meth)acrylsäureester aus (Meth)acrylsäure und Hydroxylverbindungen hergestellt wird und in einer zweiten Stufe überschüssige (Meth)acrylsäure mit Epoxiden umgesetzt wird.

Aus der EP-A-280 222 (O.Z. 0050/38998), da DE-A-23 46 424 und der EP-A-211 978 ist bekannt, die Reaktivität von Acrylaten durch Zusatz von Verbindungen mit primären und/oder sekundären Aminogruppen zu erhöhen. Die Aminogruppen addieren sich dabei an die Doppelbindungen der Acrylate (Michael-Addition). Im Falle der obigen zweistufig hergestelllten Acrylate führt die Aminzugabe zu einem starken Anstieg der Viskosität, wodurch der Bedarf an Reaktivverdünnern im unerwünschten Ausmaß erhöht wird.

Aufgabe der vorliegenden Erfindung war daher ein Verfahren zur Herstellung von aminmodifizierten Acrylaten in Zweistufenfahrweise, d.h. Umsetzung von (Meth)acrylsäure mit Hydroxyverbindungen und anschließende Reaktion mit Epoxiden, bei dem das Reaktionsprodukt eine möglichst geringe Viskosität aufweist.

Demgemäß wurde ein Verfahren zur Herstellung von strahlungshärtbaren Acrylaten gefunden, welches dadurch gekennzeichnet ist, daß in einer 1. Stufe Hydroxyverbindungen mit Acrylsäure oder Methacrylsäure umgesetzt werden und das Reaktionsprodukt der 1. Stufe anschließend in einer 2. Stufe mit Epoxidverbindungen zur Reaktion gebracht wird und in oder vor der 2. Stufe Verbindungen mit einer oder mehreren primären oder sekundären Aminogruppen zugesetzt werden und die Reaktion in der 2. Stufe nach Zugabe dieser Verbindungen noch solange geführt wird, bis die Säurezahl der Reaktionsmischung um mindestens einen Betrag von 3 mg KOH/g Reaktionsmischung ab dem Zeitpunkt der Zugabe dieser Verbindungen abgenommen hat.

Gefunden wurden auch die nach diesem Verfahren erhältlichen Acrylate, sowie ihre Verwendung in Überzugsmassen.

Beim erfindungsgemäßen Verfahren wird in einer 1. Stufe Acrylsäure oder Methacrylsäure (zusammenfassend (Meth)acrylsäure genannt), vorzugsweise Acrylsäure, mit einer Hydroxyverbindung umgesetzt. Als Hydroxyverbindungen in Betracht kommen Verbindungen mit einer oder mehreren Hydroxylgruppen. Genannt seien Monoalkohole, z.B. Alkanole oder alkoxylierte Alkohole mit einer verbleibenden OH-Gruppe, C₂-C₈-Alkylendiole, Trimethylpropan, Glycerin oder Pentaerythrit, oder z.B. mit Ethylenoxid oder Propylenoxid alkoxylierte, Hydroxygruppen enthaltende Verbindungen.

Bevorzugte Hydroxyverbindungen sind mindestens 2, insbesondere 2 bis 6 freie Hydroxylgruppen enthaltende, gesättigte Polyester, welche gegebenenfalls auch Ethergruppen enthalten können oder Polyether mit mindestens 2, insbesondere 2 bis 6 freien Hydroxylgruppen.

Die Molekulargewichte Mₙ der Polyester bzw. Polyether liegen bevorzugt zwischen 100 und 4000 (Mₙ bestimmt durch Gelpermeationschromatographie).

Derartige hydroxylgruppenhaltige Polyester können z.B. in üblicher Weise durch Veresterung von Dicarbonsäuren oder Polycarbonsäuren mit Diolen oder Polyolen hergestellt werden. Die Ausgangsstoffe für solche hydroxylgruppenhaltige Polyester sind dem Fachmann bekannt.

Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride, z.B. Maleinsäureanhydrid, oder Dialkylester der genannten Säuren eingesetzt werden. Als Polycarbonsäure, bzw. deren Anhydride seien Tri- oder Tetrasäuren wie Trimellitsäureanhydrid oder Benzoltetracarbonsäure genannt.

Als Diole kommen vorzugsweise in Betracht Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols.

Als Polyole sind in erster Linie Trimethylolpropan, Glycerin oder Pentaerythrit zu nennen.

Als Diole oder Polyole in Betracht kommen auch oxalkylierte (z.B. mit Ethylenoxid oder Propylenoxid) Diole oder Polyole, insbesondere mit einem Oxalkylierungsgrad von 0 bis 10, bezogen auf die jeweiligen Hydroxygruppen des Diols oder Polyols.

Zu den erfindungsgemäß einzusetzenden Polyesterolen zählen auch Polycaprolactondiole und -triole, deren Herstellung dem Fachmann ebenfalls bekannt ist.

Als hydroxylgruppenhaltige Polyether kommen z.B. solche in Frage, welche nach bekannten Verfahren durch Umsetzung von zwei- und/oder mehrwertigen Alkoholen mit verschiedenen Mengen an Ethylenoxid und/oder Propylenoxid erhalten werden können. Desgleichen sind auch Polymerisationsprodukte des Tetrahydrofurans oder Butylenoxids verwendbar.

Bevorzugte hydroxylgruppenhaltige Polyether sind Oxalkylierungsprodukte der obengeannten Diole oder Polyole, insbesondere mit einem Oxalkylierungsgrad von 0 bis 10, besonders bevorzugt 1 bis 10, bezogen auf die jeweiligen Hydroxylgruppen des Diols oder Polyols, wobei jedoch insgesamt mindestens 2 Alkoxygruppen im Polyether vorhanden sind.

Bei der Veresterung der (Meth)acrylsäure im Falle des hydroxylgruppenhaltigen Polyesters ist es z.B. auch möglich, die (Meth)acrylsäure zusammen mit Ausgangsstoffen des hydroxylgruppenhaltigen Polyesters, z.B. Dicarbonsäuren oder deren Anhydride und Diole bzw. Polyole vorzulegen und die Ausgangsstoffe zusammen mit der (Meth)acrylsäure in einer Stufe umzusetzen.

Bei der Veresterung von (Meth)acrylsäure mit der Hydroxyverbindung werden bevorzugt 0,1 bis 1,5, besonders bevorzugt 0,5 bis 1,4 und ganz besonders bevorzugt 0,7 bis 1,3 Äquivalente (Meth)acrylsäure, bezogen auf 1 Hydroxy-Äquivalent der Hydroxyverbindungen eingesetzt. Im oben erwähntem Fall, daß von den Ausgangsstoffen, z.B. des hydroxylgruppenenthaltenden Polyesters, bei der Veresterung ausgegangen wird, beziehen sich die Äquivalente der (Meth)acrylsäure auf das theoretisch nach Reaktion der Ausgangsstoffe, z.B. Reaktion von Dicarbonsäuren mit Diolen oder Polyolen, verbleibende Hydroxyäquivalent.

Die Umsetzung der (Meth)acrylsäure mit den Hydroxyverbindungen kann z.B. in Gegenwart eines sauren Veresterungskatalysators, wie z.B. Schwefelsäure oder p-Toluolsulfonsäure, sowie in Gegenwart eines Kohlenwasserstoffs, der mit Wasser ein azeotropes Gemisch bildet, insbesondere bis zu einem Umsatz von insbesondere mindestens 85 %, vorzugsweise 90 bis 95 %, der Hydroxylgruppen der Hydroxyverbindung, beispielsweise bei 60 bis 140°C, durchgeführt werden. Das gebildete Reaktionswasser wird azeotrop entfernt. Geeignete Kohlenwasserstoffe sind aliphatische und aromatische, z.B. Alkane und Cycloalkane, wie n-Hexan, n-Heptan und Cyclohexan, Aromaten wie Benzol, Toluol und die Xylol-Isomeren, und sog. Spezialbenzine, welche Siedegrenzen zwischen 70 und 140°C aufweisen.

Zur Vermeidung einer vorzeitigen Polymerisation wird die Umsetzung mit (Meth)acrylsäure zweckmäßigerweise in Gegenwart geringer Mengen von Inhibitoren durchgeführt. Dabei handelt es sich um die üblichen, zur Verhinderung einer thermischen Polymerisation verwendeten Verbindungen, z.B. vom Typ des Hydrochinons, der Hydrochinonmonoalkylether, des 2,6-Di-t-butylphenols, der N-Nitrosoamine der Phenothiazine oder der Phophorigsäureester. Sie werden im allgemeinen in Mengen von 0,001 bis 2,0 %, vorzugsweise in Mengen von 0,005 bis 0,5 %, bezogen auf die Reaktion in der 1. Stufe eingesetzt.

Nach der Veresterung kann das Lösungsmittel, z.B. der Kohlenwasserstoff, aus dem Reaktionsgemisch destillativ, gegebenenfalls unter vermindertem Druck, entfernt werden. Der Veresterungskatalysator kann in geeigneter Weise neutralisiert werden, z.B. durch Zusatz von tertiären Aminen oder Alkalihydroxyden. Auch überschüssige (Meth)acrylsäure kann teilweise z.B. durch Destillation im Vakuum entfernt werden. Das Reaktionsprodukt der 1. Stufe weist vor Beginn der Umsetzung in der 2. Stufe im allgemeinen noch eine Säurezahl oberhalb von 25, insbesondere von 35 bis 100 mg KOH/g Substanz (ohne Lösungsmittel) auf.

In der 2. Stufe wird das in der 1. Stufe erhaltene Reaktionsprodukt mit einer Epoxidverbindung umgesetzt. Epoxidverbindungen sind solche mit mindestens einer, bevorzugt mit mindestens zwei, vorzugsweise zwei oder drei Epoxidgruppen im Molekül.

In Betracht kommen z.B. epoxidierte Olefine, Glycidylester von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen von Bisphenol A-Typ und Glycidylether mehrfunktioneller Alkohole, z.B. des Butandiols, des Glycerins und des Pentaerythrits. Beispiele für derartige Polyepoxidverbindungen sind ®Epikote 812 (Epoxidwert: ca. 0,67) und Epikote 828 (Epoxidwert: ca. 0,53) und Epikote 162 (Epoxidwert: ca. 0,61) der Firma Shell.

Die Epoxidverbindungen werden dem in der 1. Stufe erhaltenen Reaktionsprodukt im allgemeinen in Mengen von 1 bis 20 Gew.-%, besonders bevorzugt von 5 bis 15 Gew.-%, zugegeben. Ganz besonders bevorzugt werden die Epoxidverbindungen in ungefähr äquimolaren Mengen, bezogen auf die noch vorhandenen Säureäquivalente im Reaktionsprodukt der 1. Stufe, eingesetzt.

Bei der Umsetzung mit Epoxidverbindungen in der 2. Stufe wird überschüssig eingesetzte bzw. nicht umgesetzte Säure, insbesondere (Meth)acrylsäure, daneben aber auch z.B. noch im Gemisch als Ausgangsstoff vorhandene Dicarbonsäure oder entstandene Halbester von Dicarbonsäuren mit einer verbleibenden Säuregruppe als Epoxidester gebunden.

Die Umsetzung mit Epoxidverbindungen erfolgt bevorzugt bei 90 bis 130, besonders bevorzugt bei 100 bis 110°C und wird vorzugsweise so lange durchgeführt, bis das Reaktionsgemisch eine Säurezahl unter 5 mg KOH/g aufweist.

Als Katalysatoren für die Umsetzung der Epoxidverbindungen mit den Säuregruppen in der 2. Stufe können z.B. quartäre Ammonium- oder Phosphoniumverbindungen, tertiäre Amine, Phosphine wie Triphenylphosphin oder Lewisbasen wie Thiodiglycol eingesetzt werden.

Die Katalysatoren werden bevorzugt in Mengen von 0,01 bis 5, besonders bevorzugt von 0,1 bis 3 Gew.-%, bezogen auf die Epoxidverbindungen, verwendet.

Während der Umsetzung mit den Epoxidverbindungen in der 2. Stufe werden dem Reaktionsgemisch Verbindungen mit einer oder mehreren primären oder sekundären Aminogruppen zugegeben.

Bevorzugt beträgt die Anzahl aminischer Wasserstoffatome (N-H) von primären oder sekundären bei diesen Verbindungen 1 bis 6, besonders bevorzugt 2 bis 4.

So beträgt z.B. die Anzahl der aminischen Wasserstoffatome bei einer Verbindung mit zwei primären Aminogruppen 4 und bei einer Verbindung mit einer primären und einer sekundären Aminogruppe 3.

Primäre oder sekundäre Aminogruppen addieren sich gemäß einer Michaeladdition an Acrylgruppen: 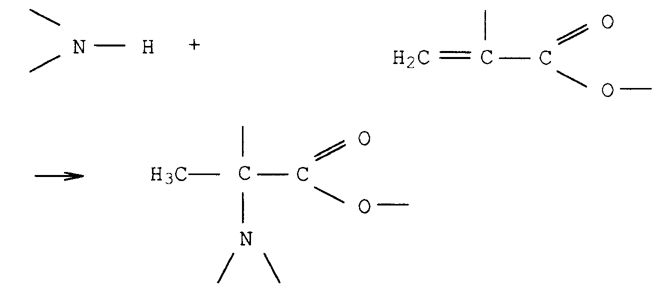
Aus primären Aminogruppen werden dabei sekundäre Aminogruppen, welche sich wiederum erneut an Acrylgruppen unter Bildung tertiärer Aminogruppen addieren können.

Geeignete Verbindungen mit primären oder sekundären Aminogruppen sind im allgemeinen niedermolekular und weisen vorzugsweise ein Molgewicht unter 1000 auf.

Zu nennen sind beispielsweise primäre Monoamine wie C₁-C₂₀-alkylamine, insbesondere n-Butylamin, n-Hexylamin, 2 Ethylhexylamin, Octadecylamin, cycloaliphatische Amine wie Cyclohexylamin sowie (hetero)aromatengruppenhaltige Amine wie Benzylamin, 1-(3-Aminopropyl-)imidazol, Tetrahydrofurfurylamin.

Verbindungen mit 2 primären Aminogruppen sind z.B. C₁-C₂-alkylendiamine wie Ethylendiamin, Butylendiamin Neopentandiamin oder Hexamethylendiamin.

Weiterhin genannt seien 4,9 Dioxadodecan-1,12-diamin, 4,7,10 Trioxatridecan-1,13-diamin, 4,4'-Diaminodicyclohexylmethan. Als Amine mit Hydroxylgruppen genannt seien Alkanolamine, z.B. Ethanolamin der t-Propanolamin, Aminoethoxyethanol, Aminoethylethanolamin, 2-Aminopropanol, 2-Aminobutanol etc.

Verbindungen mit primären und sekundären Aminogruppen sind z.B. 3-Amino-1-methylaminopropan, Diethylentriamin, Dipropylentriamin, N,N'-Bis(3-aminopropyl)-ethylendiamin.

Vorzugsweise werden die Verbindungen mit einer oder mehreren primären oder sekundären Aminogruppen in solchen Mengen eingesetzt, daß auf 1 Mol der Acrylgruppen 0,005 bis 0,4, bevorzugt 0,1 bis 0,3 Mol aminische Wasserstoffatome von primären oder sekundären Aminogruppen kommen.

Die Verbindungen mit primären oder sekundären Aminogruppen werden der Reaktionsmischung in oder vor der 2. Stufe zugesetzt und die Reaktion in der 2. Stufe anschließend noch solange fortgeführt bis die Säurezahl nach Zugabe der Verbindungen mit primären oder sekundären Aminogruppen um mindestens einen weiteren Betrag von 3 mg KOH/g Reaktionsmischung, vorzugsweise mindestens 4 mg KOH/g Reaktionsmischung ab dem Zeitpunkt der Zugabe dieser Verbindungen fällt.

Vorzugsweise werden die Verbindungen mit primären oder sekundären Aminogruppen bei einer Säurezahl der Reaktionsmischung von 8 bis 80, insbesondere bevorzugt bei 9 bis 35 mg KOH/g zugesetzt. Vorzugsweise erfolgt die Zugabe während der Umsetzung in der 2. Stufe. Die Umsetzung in der 2. Stufe wird dann vorzugsweise beendet, wenn die Säurezahl auf einen Wert unter 5 mg KOH/g gefallen ist.

Die nach dem erfindungsgemäßen Verfahren erhältlichen strahlungshärtbaren Acrylate weisen eine geringe Viskosität auf, wodurch insbesondere der Bedarf an Reaktivverdünnern zur Einstellung von zur Verarbeitung geeigneten Viskositäten vermindert wird.

Die nach dem erfindungsgemäßen Verfahren erhältlichen strahlungshärtbaren Acrylate eignen sich insbesondere zur Verwendung als oder in Massen, welche thermisch, bevorzugt aber durch energiereiche Strahlung gehärtet werden können.

Die Massen können als bzw. in Beschichtungsmassen, z.B. Lacken, Druckfarben, oder Klebstoffen, als Druckplatten, als Formkörper, zur Herstellung von Photoresisten, in der Stereolithographie oder als Gießmasse, z.B. für optische Linsen verwendet werden.

Zur Verwendung als oder in strahlungshärtbaren Massen können den strahlungshärtbaren Acrylaten z.B. Zusatzstoffe wie Vernetzer, Verdicker, Verlaufsmittel oder Füllstoffe bzw. Pigmente etc. zugesetzt werden (im folgenden strahlungshärtbare Zubereitung genannt).

Die strahlungshärtbaren Acrylate bzw. ihre Zubereitungen können thermisch, vorzugsweise durch energiereiche Strahlung wie UV-Licht oder Elektronenstrahlen gehärtet werden.

Zur Strahlungshärtung durch UV-Licht werden üblicherweise Photoinitiatoren zugesetzt.

Als Fotoinitiatoren in Betracht kommen z.B. Benzophenon und Derivate davon, wie z.B. Alkylbenzophenone, halogenmethylierte Benzophenone, Michlers Keton, sowie Benzoin und Benzoinether wie Ethylbenzoinether, Benzilketale wie Benzildimethylketal, Acetophenonderivate wie z.B. Hydroxy-2-methyl-phenylpropan-1-on und Hydroxycyclohexyl-phenylketon, Anthrachinon und seine Derivate wie Methylanthrachinon und insbesondere Acylphosphinoxide wie z.B. Lucirin® TPO (2,4,6-Trimethylbenzoyldiphenylphosphinoxid).

Die Fotoinitiatoren, die je nach Verwendungszweck der erfindungsgemäßen Massen in Mengen zwischen 0,1 und 15 Gew.-%, vorzugsweise 1 bis 10 Gew.-%, bezogen auf die polymerisierbaren Komponenten, eingesetzt werden, können als einzelne Substanz oder, wegen häufiger vorteilhafter synergistischer Effekte, auch in Kombination miteinander verwendet werden.

### Beispiele

I 562,8 g Dipropylenglykol, 204,4 g Adipinsäure, 443,5 g Acrylsäure und 403 g Methylcyclohexan wurden mit Stabilisatoren und 6,05 g Schwefelsäure versetzt und auf 100°C aufgeheizt. Innerhalb von 5 Stunden wurden 152 ml acrylsäurehaltiges Wasser (Säurezahl von 175,3 mg KOH/g) ausgekreist. Das Lösungsmittel und überschüssige Acrylsäure wurden bis zu einer Säurezahl von 44,1 mg KOH/g abdestilliert. Anschließend wurden bei 107°C 154,8 g Bisphenol-A-diglycidether (Epikote® 828) und 22,9 g Tributylamin zugegeben. Dem Ansatz wurden 3 Teile a) bis c) zu je 310 g entnommen und die Reaktionsmischungen anschließend jeweils 4,5 Stunden bei 107°C gehalten, wobei
   - im Ansatz a): 9,3 g Ethylendiamin bei einer Säurezahl von 17,1 mg KOH/g (nach 1,5 Stunden Reaktionszeit) zugesetzt wurden,
   - im Ansatz b): 9,3 g Ethylendiamin bei einer Säurezahl von 9,6 mg KOH/g (nach 2,5 Stunden Reaktionszeit) zugesetzt wurden,
   - im Ansatz c): 9,3 Ethylendiamin bei einer Säurezahl von 4,9 nach Ablauf der 4,5 Stunden zugesetzt wurde.

Viskositäten der Endprodukte sind in Tabelle 1 aufgelistet.

**Tabelle 1**

| | Säurezahl bei Aminzugabe | Säurezahl nach Ende der Reaktion in der 2. Stufe | Viskosität/Pas |
|---|---|---|---|
| I a) | 17,1 | 6,7 | 11,8 |
| I b) | 9,6 | 4,4 | 17,6 |
| I c)* | 4,9 | 2,6 | 58,2 |

| | | | |
|---|---|---|---|
| * zum Vergleich | | | |

II Beispiel II wurde wie I durchgeführt, jedoch mit folgenden Ausgangsstoffen:
748,8 g Tripropylenglykol, 189,8 g Adipinsäure, 411,8 g Acrylsäure, 450,0 g Methylcyclohexan, 6,75 g Schwefelsäure, 25,6 g Tributylamin und 165,6 g Epikote 828; Zugabe von 7,75 g Ethylendiamin jeweils zu 310 g Zwischenprodukte der Stufe 1.

Viskosität der Endpunkte sind in Tabelle 2 aufgelistet.

**Tabelle 2**

| | Säurezahl bei Aminzugabe | Säurezahl nach Ende der Reaktion in der 2. Stufe | Viskosität/Pas |
|---|---|---|---|
| II a) | 15,6 | 6,2 | 7,1 |
| II b) | 9,8 | 4,3 | 8,5 |
| II c)* | 3,7 | 2,7 | 18,6 |

| | | | |
|---|---|---|---|
| * zum Vergleich | | | |

## Patentansprüche

1. Verfahren zur Herstellung von strahlungshärtbaren Acrylaten, dadurch gekennzeichnet, daß in einer 1. Stufe Hydroxyverbindungen mit Acrylsäure oder Methacrylsäure umgesetzt werden und das Reaktionsprodukt der 1. Stufe anschließend in einer 2. Stufe mit Epoxidverbindungen zur Reaktion gebracht wird und in oder vor der 2. Stufe Verbindungen mit einer oder mehreren primären oder sekundären Aminogruppen zugesetzt werden und die Reaktion in der 2. Stufe nach Zugabe dieser Verbindungen noch solange geführt wird, bis die Säurezahl der Reaktionsmischung um mindestens einen Betrag von 3 mg KOH/g Reaktionsmischung ab dem Zeitpunkt der Zugabe dieser Verbindungen abgenommen hat.

2. Verfahren gemäß Anspruch 1, dadurch gekennzeichnet, daß die Zugabe der Verbindungen mit einer oder mehreren primären oder sekundären Aminogruppen bei einer Säurezahl von 80 bis 8 mg KOH/g erfolgt.

3. Verfahren nach Anspruch 1 oder 2, dadurch gekennzeichnet, daß Verbindungen mit einer oder zwei primären Aminogruppen zugesetzt werden.

4. Verfahren nach einem der Ansprüche 1 bis 3, dadurch gekennzeichnet, daß es sich bei den Hydroxylverbindungen um gesättigte, mindestens zwei Hydroxygruppen im Molekül enthaltende Polyester, welche auch Ethergruppen enthalten können oder um mindestens zwei Hydroxyverbindungen enthaltende Polyether handelt.

5. Verfahren nach einem der Ansprüche 1 bis 4, dadurch gekennzeichnet, daß es sich bei den Epoxidverbindungen um Diepoxid- oder Triepoxidverbindungen handelt.

6. Strahlungshärtbare Acrylate erhältlich durch ein Verfahren gemäß einem der Ansprüche 1 bis 5.

7. Verwendung von strahlungshärtbaren Acrylaten gemäß Anspruch 6 in strahlungshärtbaren Massen.
